# EUROPEAN PATENT APPLICATION

(11) **EP 0 877 461 A2**
(43) Date of publication of application: **11.11.1998**
(21) Application number: 98660038.5
(22) Date of filing: 28.04.1998
(51) Int. Cl.: H02G 7/05

(54) **Suspension bracket for a cable**

(30) Priority: 05.05.1997 FI 971907
(71) Applicant: Ensto Sekko Oy, 06100 Porvoo (FI)
(72) Inventor: Turunen, Harri, 07900 Loviisa (FI)
(74) Representative: LEITZINGER OY

(57) **Abstract**

The invention relates to a suspension bracket for a cable, particularly for the suspension of optical fiber cables or other communication cables on poles or crossarms set at fixed distances apart. The bracket includes a frame (1), to which is journalled a lower bearing roller (3) and an upper roller (4). Both rollers (3, 4) are thinner in the middle than in the ends and define therebetween a cable accomodation space (13). The bearing roller (3) is axially movable for expanding or reducing a gap remaining between the rollers (3, 4), whereby a cable can be brought sideways into the space between the rollers (3, 4) and the cable can be retained in said space in such a manner that is freely movable in its lengthwise direction but cannot disengage sideways from the bearing roller (3).

## Description

The present invention relates to a suspension bracket for a cable, particularly for the suspension of optical fiber cables or other communication cables on poles, crossarms, or other support structures spaced at fixed distances, said bracket comprising a frame and a bearing roller, rotatably journalled thereto and having a concave bearing surface, such that the mid-portion of the roller has a diameter which is smaller than that at the ends of the roller, as well as a suspension element integral with the frame. The installation of lightweight optical cables sets special requirements on suspension brackets in order to maintain the fibers of a cable in good condition and to prevent external loads (wind, rain, and ice) from causing suppressions and discontinuities.

It is prior known to install cables by resting the same on suspension brackets provided with bearing rollers for fixed-distance stretching stages, the end of each stretching stage being provided with a weight keeping the cable at a proper tension.

An object of the invention is to provide a cable suspension bracket of the above type, which enables an easy installability for a cable and also secures a safe support for a cable without a hazard of damaging the cable as a result of sudden load fluctuations, either.

This ibject is achieved with the invention on the basis of the characterizing features set forth in the appended claim 1.

The non-independent claims disclose preferred embodiments of the invention.

One exemplary embodiment of the invention will now be described in more detail with reference made to the accompanying drawings, in which
- fig. 1: shows a suspension bracket of the invention, seen in the direction of a cable and in a condition suitable for the installation of a cable;
- fig. 2: shows the suspension bracket of fig. 1 in a side view; and
- fig. 3: shows the same suspension bracket in a condition in which the bracket holds laterally a cable mounted on the bracket but allows an unimpeded movement for the cable in lengthwise direction and a certain degree of clearance also in lateral direction.

The suspension bracket comprises a frame 1, including a shorter frame leg 10, a longer frame leg 9, and a suspension shank 11, having its end provided with a suspension loop 2 for securing the bracket to a pole, a crossarm, or some other supporting structure.

A bearing roller 3 is provided with an axial screw 5 which is threaded into a threaded hole included in the bottom end of the frame leg 9. The screw 5 is enveloped by a bushing 8, around which the bearing roller 3 is rotating. The bushing 8 has a length which exceeds slightly the length of the bearing roller 3, whereby the bushing 8 can be pressed between the head of the screw 5 and the leg 9 of the frame 1. Thus, the bushing 8 provides additional support for the bearing roller 3 as compared to the situation that the roller 3 would only be propped around the screw 5.

The bearing roller 3 is provided with a concave bearing surface 3b, i.e. the mid-portion of the roller has a diameter which is smaller than the diameter at roller ends 3a.

Above the roller 3 is another roller 4 between the frame legs 9 and 10. A screw 6 constitutes an axis of rotation for the roller 4. The roller 4 is slightly smaller in terms of its diameter and slightly shorter in terms of its length than the bearing roller 3. The roller 4 is also provided with a surface 4b which is concave, i.e. the roller 4 is flaring from the middle towards its gables 4a.

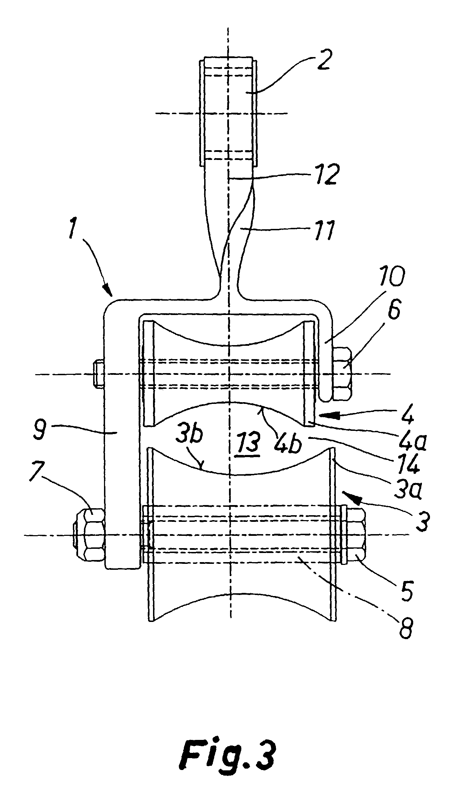

Between the concave surfaces 3b and 4b of the rollers 3 and 4 develops a cable accommodation space 13, which converges from the middle towards the ends of the rollers 3 and 4 for retaining a cable in the accommodation space 13. Fig. 3 illustrates a gap 14 between the ends 3a and 4a of the rollers 3 and 4, said gap being slightly smaller than the cable diameter at the bracket (at the bracket, the cable may be enveloped by an extra support jacket, which increases the cable diameter).

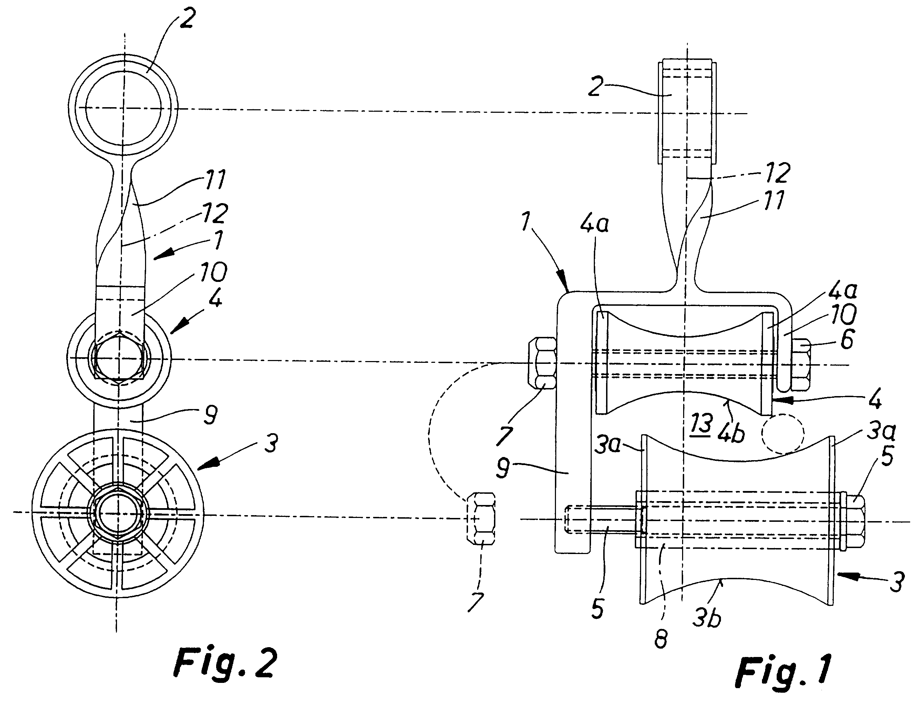

In order to manage the installation of a cable in the accommodation space 13 by bringing the cable between the rollers sideways and far from its ends, the gap 14 visible in fig. 3 is enlarged as shown in fig. 1, such that the bearing roller 3 is moved axially, the concave surface 3b pulling away from the gable edge 4a of the roller 4. Thus, the screw 5 must have a sufficient length in order to hold the roller 3 in position also in this axially displaced condition. After threading the wire into its position in the space 13 between the rollers 3 and 4, the screw 5 is tightened up, the bushing 8 being pressed between the head of the screw 5 and the frame leg 9. The end of the screw 5 emerges out of the frame leg 9, whereby a nut 7, which has been stored at the end of the screw 6, is replaced in the end of the screw 5 and the screw 5 is clamped in position by means of the nut 7. The nut 7 may have its outer edge provided with a locking thread for preventing accidental unclamping of the nut 7. The end of the screw 6 only emerges from the external surface of the frame leg 9 to such an extent that the locking thread of the nut 7 does not provide an engagement with the screw 6.

The frame in its entirety can be made by cutting a length from a matching profile rod. In order to make the axial direction of the suspension loop 2 transverse to the direction of the wire, the suspension shank 1 has been turned 90° around its longitudinal axis 12. Thus, the bracket will have a suspension angle which is capable of adjusting itself in accordance with any given loads that the cable will be subjected to. Since the loads delivered by a cable to the upper roller 4 are lesser and momentary in nature, the upper roller 4 can also be replaced with a concave sliding surface.

In a bracket of the invention, the rollers 3, 4 and the suspension loop 2 have the centre axes thereof on a common straight line 12, whereby the bracket provides a cable with proper support from below and above and conforms to the direction of the cable.

An extra advantage offered by the bracket of the invention is that the bracket is applicable to varying cable diameters. Although the bracket is designed especially for supporting optical fiber cables, it is obviously useful, especially in temporary installations, for supporting also cables fitted with metal wires. In addition to this, the bracket of the invention is also suitable for combination cables, including both metal wires and optical fibers.

In addition to moving the roller 3, there are other methods for temporarily enlarging the gap 14. For example, the aperture for the screw 6 in the frame leg 10 can be given an elongated shape, such that, by loosening the screw 6, the end of the roller 4 can be slightly distanced from the roller 3.

## Claims

1. A suspension bracket for a cable, particularly for the suspension of optical fiber cables or other communication cables on poles, crossarms, or other support structures spaced at fixed distances, said bracket comprising a frame (1) and a bearing roller (3), rotatably journalled thereto and having a concave bearing surface (3b), such that the mid-portion of the roller has a diameter which is smaller than that at roller ends (3a), as well as a suspension element (2) integral with the frame, **characterized** in that between the bearing roller (3) and the suspension element (2) is a second concave bearing surface (4b), which is constituted by a roller (4) or a sliding surface and which, together with the bearing surface (3b) of the bearing roller (3), defines a cable accomodation space (13) which converges from the middle towards the bearing roller ends (3a) for retaining a cable in the accomodation space (13), and that the bearing roller (3) and the second bearing surface (4b) are movable relative to each other for expanding said cable-retaining convergence (14), such that the cable can be brought into the accomodation space (13) sideways and far from its ends.

2. A bracket as set forth in claim 1, **characterized** in that the bearing roller (3) is axially movable in such a fashion that its end (3) is positioned at a substantial axial distance away from a gable edge (4a) of the second bearing surface (4b).

3. A bracket as set forth in claim 1 or 2, **characterized** in that said second bearing surface (4b) is the surface of the roller (4) flaring from the middle towards its gables.

4. A bracket as set forth in any of claims 1-3, **characterized** in that the roller (4) constituting the second bearing surface (4b) is smaller in terms of its diameter and shorter in terms of its length than the bearing roller (3).

5. A bracket as set forth in any of claims 1-4, **characterized** in that the bearing roller (3), the roller (4) constituting the second bearing surface (4b), and loop-shaped suspension element (12) have the centre axes thereof on a common straight line (12).

6. A bracket as set forth in any of claims 1-5, **characterized** in that the spindle of the roller (3) is constituted by a bushing (8), fitted areound a screw (5) and having a length which slightly exceeds the length of the bearing roller (3) and being pressed between the head of the screw (5) and a leg (9) of the frame (1).

7. A bracket as set forth in any of claims 1-6, **characterized** in that the frame (1) is provided with a shorter leg (10) and a longer leg (9), the second bearing surface (4) being fitted between both legs (9, 10) and the bearing roller (3) being mounted on a spindle (5, 8), which attaches only by one end thereof to said longer frame leg (9) in the proximity of its outer end.

8. A bracket as set forth in any of claims 1-7, **characterized** in that the frame (1) is made by cutting a length from a profiled rod.

9. A bracket as set forth in any of claims 1-8, **characterized** in that the loop-shaped suspension element (2) connects with the rest of the frame unit by way of a suspension shank (11), which has been turned 90° around its longitudinal axis (12).
